Europäisches Patentamt

European Patent Office

Office européen des brevets

(11) Publication number: **0 408 237 A2**

# EUROPEAN PATENT APPLICATION

(21) Application number: 90307265.0

(22) Date of filing: 03.07.90

(51) Int. Cl.⁵: **G01S 13/52**

(30) Priority: 07.07.89 US 376812

(43) Date of publication of application:
16.01.91 Bulletin 91/03

(84) Designated Contracting States:
DE FR GB IT SE

(71) Applicant: RADAR CONTROL SYSTEMS
CORPORATION
7317 Ostrow Street
San Diego, California 92111(US)

(72) Inventor: Asbury, Jimmie
7817 Ostrow Street
San Diego, California 92111(US)
Inventor: Davis, John W.
7817 Ostrow Street
San Diego, California 92111(US)

(74) Representative: Dawson, Elizabeth Ann et al
A.A. THORNTON & CO. Northumberland
House 303-306 High Holbornorn
London WC1V 7LE(GB)

(54) Doppler control channel for a radar.

(57) A doppler control circuit for a CW or pulse Doppler Radar system for monitoring not only the phase shift between echo signals from several targets but also the amplitude difference between the several targets and to further provide a phase lock loop which tunes the radar to a particular target among one or more targets from which echo signals return. The circuit of this invention can be used in state of the art CW or Pulse Doppler type radar systems.

FIGURE 5A

**RELATED APPLICATION**

This Application is a continuation in part of application serial No. 07/193,393 filed May 12, 1988 the disclosure of which is hereby incorporated by reference into the subject application.

BACKGROUND OF THE INVENTION

The invention is directed to Radar devices and more particularly to special circuits for use in CW or Pulse Radar for enabling the Radar to distinguish not only the phase differences (doppler) between returning echo signals from one or more targets but also distinguish amplitude differences between the one or more targets and lock the attention of the Radar onto a selected echo signal and continue to monitor that specific target echo so long as that target is of particular interest as determined by the Radar system.

United States Patent No. 4,673,937 issued to John W. Davis on June 16, 1987 and assigned to the Assignee of the present invention teaches a vehicle borne Radar system presently believed to be at the leading edge of the vehicle borne Radar art.

However, the above referenced Radar system is not able to distinguish one individual target echo signal from a plurality of incoming target echo signals of approximately the same amplitude and lock on to that particular target echo signal until that target echo signal is replaced by a new particular target echo signal.

There is a continuing need to improve the safety of highway vehicles operation for preventing impact with moving and stationary objects and to safely increase the density of vehicles traveling the world's roadways by monitoring the distance, speed and direction of travel between one vehicle following another thereon to conserve available road space by safely increasing the number of vehicles on a given roadway at any given time and yet maintain a higher than now possible degree of safety for the passengers carried by those vehicles.

The present invention relates to an improved vehicle borne radar system for monitoring possible dangerous conditions for a particular vehicle traveling on a vehicle roadway.

OBJECTS OF THE INVENTION

One of the objects of the present invention is to provide a novel collision avoidance system for a vehicle, which system will monitor a plurality of potential obstacles or targets and select the most prominent target for continuous monitoring. Included herein is such a system which will automatically lock onto the selected target until a more prominent target appears at which time the system will lock onto the more prominent target. Further included herein is such a system that will change monitoring from one target to another virtually instantaneously.

Another object of this invention is to improve the accuracy of vehicle borne radar systems by eliminating ambiguous echo signals from targets received by the radar.

Yet another object of the present invention is to provide a vehicle borne radar system that gives operator indications of whether or not a target has been selected for monitoring.

SUMMARY OF THE INVENTION

The present invention is used in a system that advances vehicle operation safety by providing a radar vehicle expert warning system that allows the vehicle operator to continue his or her normal safe driving habits under safe conditions as defined by a first zone and warns that operator when his or her normal safe driving conditions go from the first safe zone to a second, hazard zone by providing a warning to the operator that the established safe driving conditions of the first zone are being exceeded by entry. into the second zone and that impact with another object will occur unless the operator returns to a driving condition within the first, safe zone. The warning is in sufficient time for the operator to correct the dangerous condition in an normal and expected manner by slowing or stopping the vehicle before impact or turning the vehicle into a new path of travel whereby the object is bypassed. This is accomplished by the expert radar system continually monitoring the forward path of travel of a vehicle equipped with the expert system of this invention and providing a warning to the vehicle operator if that driver's normal zone is exceeded.

The invention is specifically directed to a vehicle borne expert radar system for alerting the vehicle operator of a dangerous vehicle condition in sufficient time for the operator of the vehicle to respond to that warning to avoid the dangerous condition, such as, a collision with another object. The system is designed to prevent needless disruption of the operator when the vehicle is not in a dangerous situation by appearing to be inactivated. The system monitors a plurality of targets within a selected range and locks onto the most prominent target thereby eliminating all other targets until a more prominent target appears. The system gathers radar produced information directed to range of the most prominent (dangerous) object relative to the vehicle to which the radar has locked onto and the closing rate of that selected object. The radar produced information is then summed with driving condition modifiers such as, by way of example only, the vehicle forward speed, steering angle, acceleration and braking in a radar signal processor. A headway control Algorithm weighs the importance of these various inputs to be summed at a value which is relative to each other and to a preselected predetermined reference value according to their level of importance. The Algorithm assumes that three vehicle operation zones exist, namely, a safe zone, normal zone and a hazardous zone. These zones are determined in part by the habits of the particular vehicle operator, i.e., a conservative operator vehicle would have a smaller safe zone than a normally aggressive operator. When the algorithm results in a summed output signal level which falls in a given operator's safe zone the radar remains active but produces no driver warning. When the summed output signal level of the algorithm exceeds the safe zone and enters the hazardous zone the radar provides an output signal for warning the operator of the dangerous condition and will continue to warn the operator more dramatically as the level of danger increases, i.e., if the signal of the algorithm increases in a positive direction. For example, a conservative operator might have a maximum safe zone level of 390 units and an aggressive vehicle operator might have a maximum safe zone level of 410 units. If the factors considered by the algorithm produce 388 units for the first operator no radar warnings will be produced. Likewise, when the algorithm signal level output for the more aggressive operator reaches 409 units the safe zone will not be exceeded and, therefore, the radar will produce no operator warning (normal warning level 400 units). If the algorithm output level exceeds 390, 400 or 410 respectively the radar will produce an operator warning of an impending hazard or impact with an object. The first warning is timely to provide the operator time to either brake or turn to prevent impact with the detected object. If the first warning is not heeded by the operator, another warning will be produced by the radar again in time use evasive action to avoid impact with the detected object if immediately acted upon by the operator. Additional warnings will be provided by the radar until either the object has been averted by an active maneuver by the operator or impact occurs. These operator warnings produced by the radar increase in intensity and emotion as the hazard increases not unlike the emotions of a person witnessing an increasing dangerous condition and becoming more and more excited thereby, i.e., the first warning could be for example a soft spoken word or words and the level of a subsequent word or words could become increasingly more emotional by tone and/or volume. The final warning before impact could be in the form of a scream.

The above and other objects, features and advantages of the present invention will become more apparent from the following description of the preferred embodiment of the invention taken in conjunction with the accompanying drawing Figures.

BRIEF DESCRIPTION OF THE DRAWING FIGURES

Figure 1 is a showing of Figure 2 of the patent No. 4,673,937;
Figure 2 is a showing of figure 2A of the patent No. 4,673,937;
Figure 3 is a showing of Figure 2B of the patent No. 4,673,937;
Figure 4 is a showing of Figure 2C of the patent No. 4,673,937;
Figures 5A, 5B and 5C show circuits embodying the present invention as incorporated in the circuit shown in patent No. 4,673,937; and
Figure 6 shows graphs of the transmitter and receiver timing waveforms included on the circuits of Figures 5A, B and C

DETAILED DESCRIPTION OF DRAWING FIGURES

Referring now to drawing Figures 1-4, an explanation of these drawings can be found in the above referenced United states Patent No. 4,673,937 assigned to the same assignee of this invention.

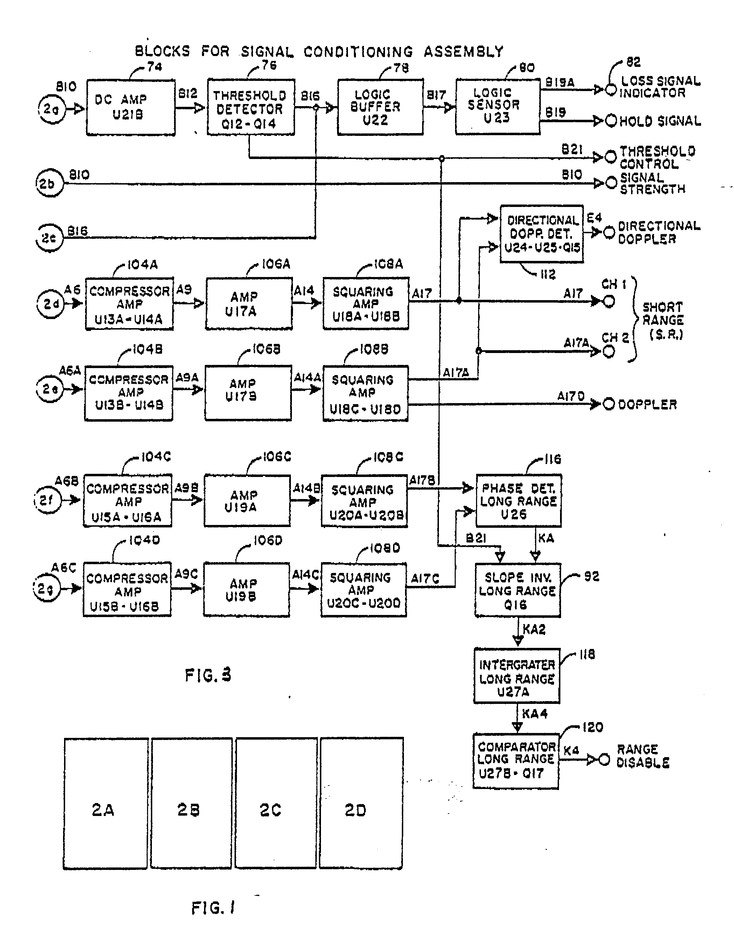

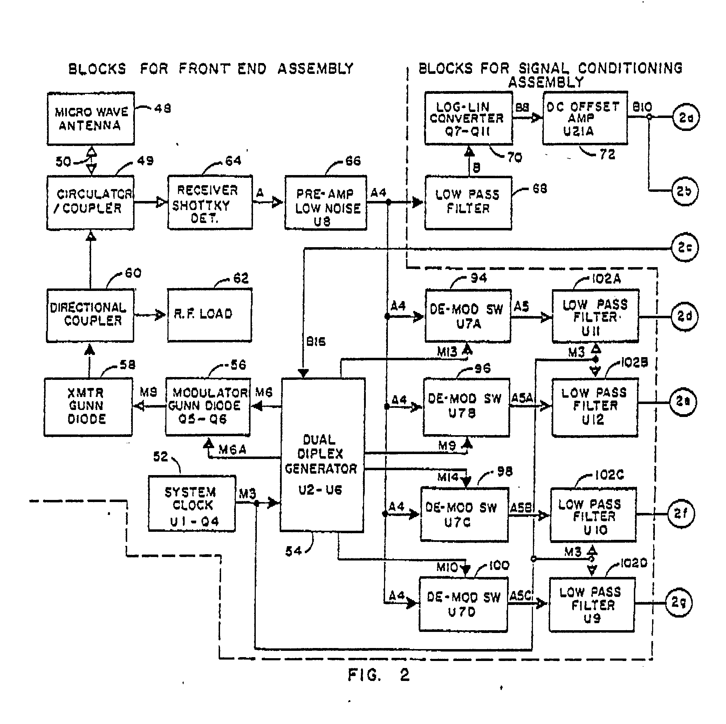

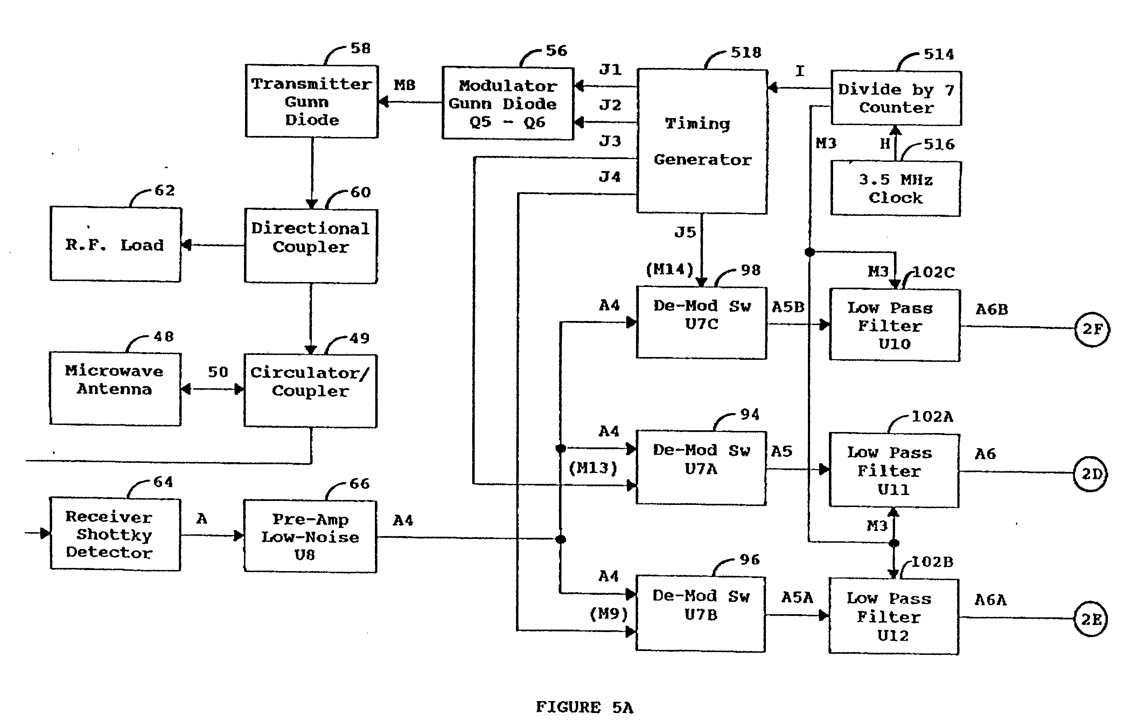

Referring now to drawing Figure 2, the circuit of this Figure is a showing of Figure 2A of Davis Patent 4,673,937 which is modified by replacing the system clock 52 and the dual diplex generator 54 with a 3.5 Mhz clock 516, a divide by seven counter 514 and a timing generator 518 connected to the circuit as shown in drawing Figures 5A-5D; eliminating the low pass filter 60 and the de-mod sw 100 and the low pass filter 102D. Also A6B is connected the input B to the log-1in converters 70 and to the doppler control channel P.

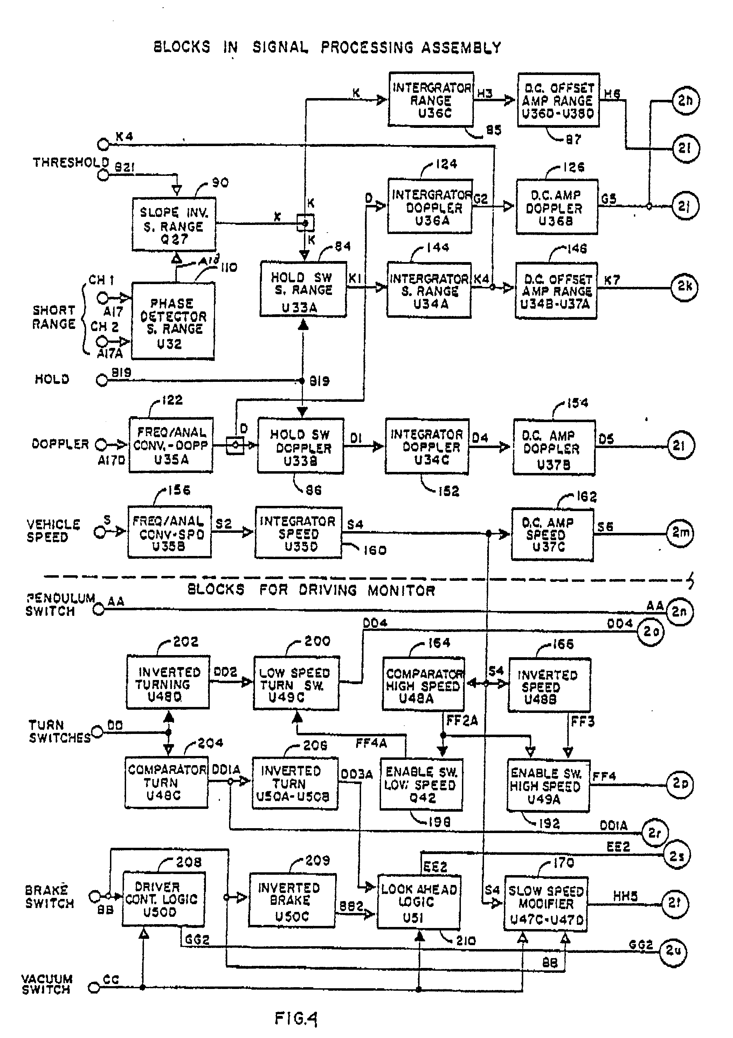

Referring now specifically to drawing Figure 3 which is a showing of drawing Figure 2B of the

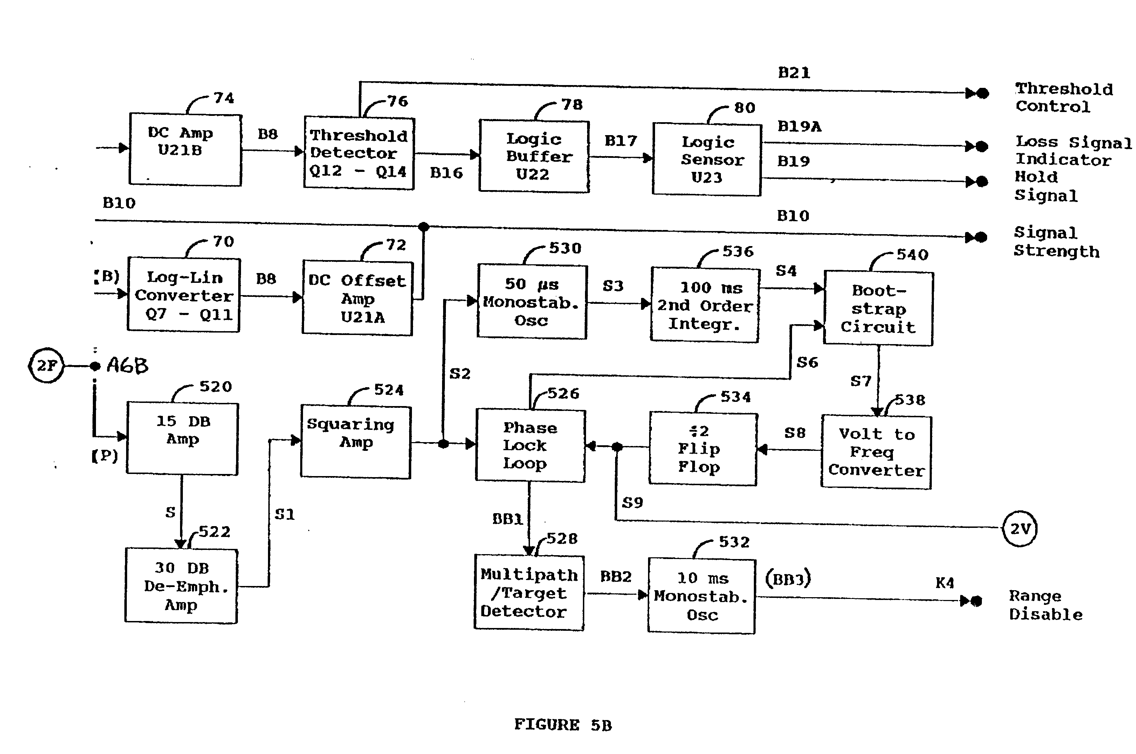

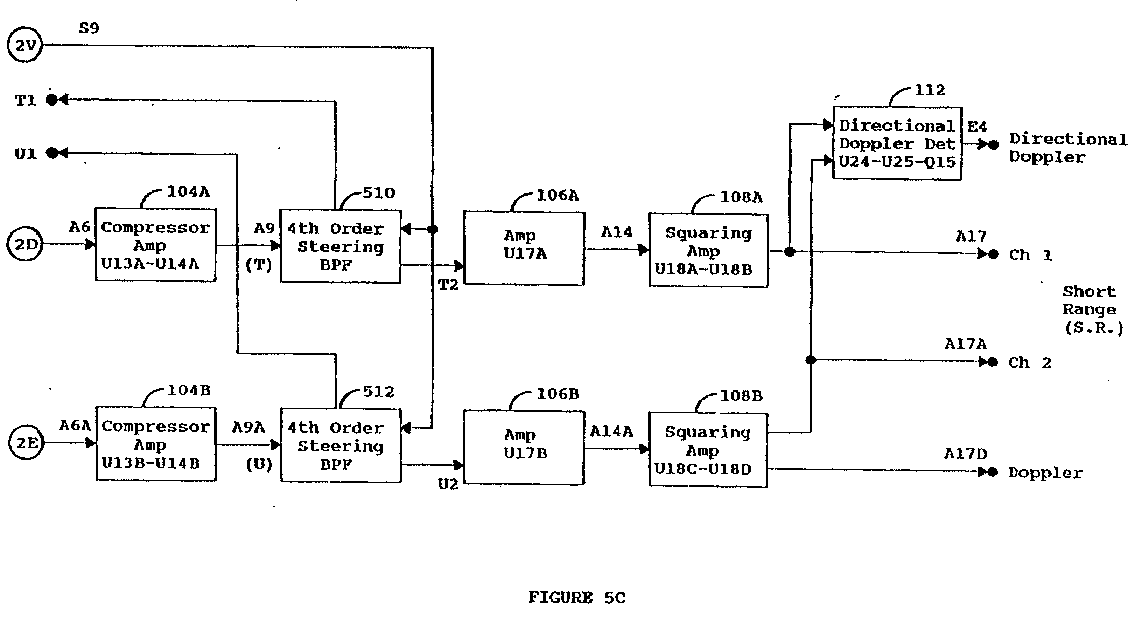

Patent No. 4,673,937. In this drawing Figure the modification includes inserting the steering bandpass filters 510 and 512, as shown in drawing Figure 5 between compressor amps 104A and 104B; Then eliminating amps 106A, 106B, compressor amps 104C and 104D, amps 106C and 106D, squaring amps 108C and 108D, phase detector 116, slope invertor long range 92, integrator long range 118, comparator long range 120 and connecting the range disable point K4 to BB3 of drawing Figures 5A-5D.

Referring now to drawing Figure 4 which is a showing of drawing Figure 2C of the patent No. 4,673,937, this portion of the latter and remaining circuits remain unchanged.

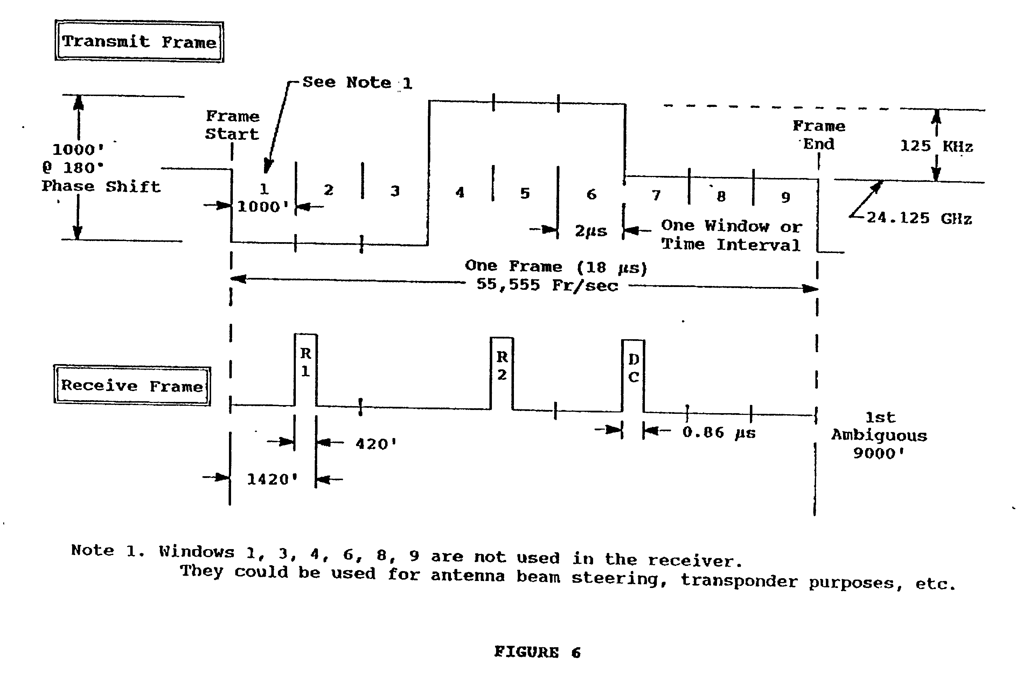

Referring now to drawing Figures 5A, B, C and 6, the new circuits shown includes a divide by seven counter 514, a 3.5 Mhz clock 516, a timing generator 518, fourth order steering band pass filters 510 and 512, a 15 db amplifier 520, a 30db de-emphasis amplifier 522, a squaring amplifier 524, a phase lock loop 526, a multi-path/target detector 528, a 50 microsecond monostable oscillator 530, a 10 milli-second monostable oscillator 532, a divide by 2 flip flop 534, a 100 milli-second 2nd order intergretor 536, a voltage to frequency converter 538 and a boot strap circuit 540. The listed new components of drawing Figures 5A, B and C are positioned and wired to each other and to the circuits shown in Patent 4,673,937 as shown.

Referring now to the operation of present invention as shown in drawing Figures 5 and 6, in addition to the phase, and rate of phase change (Doppler), the amplitude difference between several targets is evaluated by the Doppler control channel or circuits which includes 520-524 ("S-S2") and is used for target selection.

The amplitude of a principal or prominent target echo at the transmitter center frequency is determined in time sequence interval 7, see drawing Figure 6. The Doppler rate of the principal target produces a proportional frequency in both range channels T and U and in the Doppler channel S. The range channels A6-A17 and A6A-A17A provide symmetrical and very accurate phase shift processing while disregarding amplitude differences. The Doppler control channel S, on the other hand, disregards phase shift but carefully preserves relative amplitude differences. It is these amplitude differences that are being used to distinguish targets, and by means of a steerable phase lock loop S2-S9 to tune the radar receiver to the most prominent target.

At the output of the Doppler control channel at S2 the frequency to Voltage Converter (FVC), consists of a one shot monostable oscillator 530 and a low pass filter 536, (well known in the art), which generate a Doppler voltage input to the bootstrap circuit 540 of the Doppler Control Channel.

The faster the closing rate, the higher the Doppler voltage. The Doppler voltage is 0-5 VDC, where 5 volts is equal to a Doppler rate of 200 mph. The Doppler voltage is summed with the output error voltage of the Phase Lock Loop 526 (PLL) phase comparator "S6" and then applied to a Voltage to Frequency converter (VFC) "S7". The frequency converter output is 128 times the Doppler frequency "S9" and is applied to the phase lock loop 526 and the two range channels T and U to tune the center frequency of the steering Band Pass Filters (SBPFs) 510 and 512 within a frequency range of 20 Hz to 20 KHz that is proportional to a Doppler rate between 0.25 and 200 MPH. The tuned band pass frequency of the SBPFs is the output frequency of the VFC 538 divided by 256 "S8" and is the frequency of the SBPF Clock S9. This frequency is selected and maintained in both range channels "T2, U2" when the PLL has locked onto one of the multitude of frequencies (different targets) present in the Doppler channel "S". These frequencies result from: radar echoes from multiple targets, a signal echo returning by multiple paths, and echoes from reflecting objects that are too far away to be targets of interest. The PLL lock frequency is the frequency in the Doppler channel that has the largest amplitude "S1". This amplitude depends on the target and strength of the radar echo, which decreases as the distance to the target increases.

In this way, the range channel phase information that has been obtained from the most prominent target, is selected for further range processing by the SBPFs in the two ranging channels "T2, U2". Due to the amplitude discrimination occurring in the Doppler control channel "S1", which locks the phase lock loop to that target "S2-S9", all other target phase information is attenuated before entering the remaining range channel conditioning circuits. This Doppler control system enables the system to select or isolate a single target from many others.

Within a Doppler frequency span of between 20 Hz and 20 KHz (0.25 to 200 MPH) "S2", the exact tuning of the SBPF depends on the steering voltage "S7" to bring the phase lock loop into lock. This voltage "S7", in turn, is derived from the sum of the Doppler voltage "S4", and the output error voltage of the phase lock detector "S6". The use of frequency to voltage converters (FVC) "S2-S4" to increase the sum of the output bootstrapping of the phaze lock comparator "S6" (error voltage) by the Doppler voltage, before it is applied to the VFC "S7", produces a high voltage slew rate and very fast frequency shift "S9" for rapid target selection lock.

When the phase lock loop error voltage "S6" becomes zero it also indicates target-lock condition "BB3". This also causes the steering voltage input to the VFC "S7" to stop changing. At this time, the frequency output is stabilized at 128 times "S9" the Doppler frequency "S2" of the most prominent target and is used as the clock frequency for the SBPFs. The SBPFs have then been tuned to pass the range phase information associated with the closing or opening rate of the selected target "T2, U2". The range channel differential phase information is finally applied to Directional Doppler Detector 112 "A17, A17A" to extract the relative direction "E4" and range to the primary target at the output of Phase Detector Short range 110. The range voltage is 0-5 VDC, with 5 VDC = 1000 feet. The differential phase shift information which may be used to identify additional targets "T1, U1" is attenuated at the output of the SBPFs in the primary target channels "T2, U2". However, the primary target frequency is removed by the notch outputs in the SBPFs "T1, U1", the remaining differential phase information can be treated in a similar way as cited previously to provide range, doppler rate and relative direction to a second or even higher number of targets. The output frequency of the amplitude detector (Doppler control) channel "S2" is used to detect the opening/closing rate of the target. It is first converted into a proportional steering voltage "S7" and is applied to the phase lock loop VFC Converter 538. This voltage has two components. The primary one is the error voltage obtained from the phase comparator "S6", which produces a positive output voltage for inputs that have a higher frequency "S2" or leading phase shift relative to the current PLL frequency, and a negative voltage for lagging phase or lower frequency inputs "S2". The second component of the steering voltage "S7" is obtained from the Doppler control channel frequency "S2". The frequency in this channel, which corresponds to the closing rate of the target, is converted to a proportional Doppler voltage "S4". This is added to the existing steering voltage "S6" so that lower closing rates will cause the PLL to slew to the frequency of the target as fast as the higher closing rates would.

As a target is acquired, the output error voltage from the phase lock loop 526 falls to zero "S6", leaving only the voltage "S4" to set the PLL phase-coherent frequency lock "S9". In the process, the output of the Doppler channel "S1" becomes a square wave "S2" with a repetition rate proportional to the closing rate. This square wave triggers a one shot multivibrator 530 to produce a variable duty-cycle width pulse train "S3" which is than integrated into a DC voltage "S4".

The amplitude of the DC voltage "S4" is dependent on how long the pulses are allowed to discharge the integrator 536 before another impulse charges it, i.e., the pulse recurrence frequency. On slow moving targets, the DC voltage is much lower than on fast moving ones. The DC voltage varies linearly from 0 to 5 volts "S4" and is proportional to the relative velocity of the target from 1 to 200 MPH.

The remainder of the circuits of the Patent No. 4,673,937 function as explained in the Patent.

The above described embodiment of this invention is merely descriptive of the principles and is not considered limiting. The scope of this invention instead shall be determined from the scope of the following claims including their equivalent:

## Claims

1. In a control circuit for a CW or Pulse Doppler Radar Having a transmitter, an antenna and a receiver for transmitting a signal and receiving back echo signals when one or more targets are in the path of the radiated signal,
first means for selecting one of a plurality of targets and for monitoring the return echo signal from said one target.

2. The circuit as defined in claim 1 additionally comprising means for locking onto said echo signal and maintaining that locked condition until a new echo signal of greater prominence is selected by said first means.

3. The circuit defined in claim 2 wherein said first means will monitor said new echo signal until replaced by another more prominent echo signal.

4. The circuit defined in claim 1 additionally comprising circuit means for indicating that a target has not been selected.

5. The invention as defined in claim 1 additionally comprising circuit means for excluding all echo signals except that of said one target.

6. The circuit defined in claim 3 additionally comprising circuit means for excluding all echo signals except that of said one target.

7. The circuit defined in claim 1 wherein said first means selects the target which produces the echo signal of highest amplitude.

8. The circuit defined in claim 1 including circuits for measuring doppler frequency of said one target at different times for determining range to said one target.

9. The circuit defined in claim 8 including a circuit for determining the direction of said one target.

10. The circuit defined in claim 1 further including a circuit for emphasizing or deemphasizing echo signals from certain targets depending on the relative velocities.

11. The circuit defined in claim 3 wherein said first means includes a phase lock loop for maintaining an accurate lock on said one target.

12. In a vehicle collision avoidance system using CW or pulse Doppler radar comprising an antenna for transmitting a signal to targets in the path of the vehicle, a receiver for receiving echo signals from the targets, first and second range circuits for measuring Doppler frequencies of echo signals from a target at different intervals of preselected duration for determining the range to the target, and means for excluding from measurement targets beyond a preselected range limit.

13. In the system of claim 12 a circuit for selecting a target to be monitored within said range limit.

14. The system defined in claim 12 wherein said range limit is a multiple of one hundred forty feet up to a maximum of one thousand feet.

15. A method of monitoring the range of a plurality of targets in the path of a moving vehicle equipped with an antenna for transmitting a CW or pulse Doppler radar signal and a receiver for receiving the echo signal from the targets, the method comprising the steps of selecting the target that is most prominent, and monitoring the echo signals from said selected target to the exclusion of the echo signals from other targets.

16. The method defined in claim 15 including the step of monitoring the echo signal of a second new target while excluding prior selected target.

17. The method defined in claim 15 including the steps of measuring the Doppler frequencies of said target at different time intervals of preselected durations.

BLOCKS FOR SIGNAL CONDITIONING ASSEMBLY

B10 — (2a) → DC AMP U21B (74) — B12 → THRESHOLD DETECTOR Q12 - Q14 (76) — B16 → LOGIC BUFFER U22 (78) — B17 → LOGIC SENSOR U23 (80) — B19A → LOSS SIGNAL INDICATOR (82)

LOGIC SENSOR U23 — B19 → HOLD SIGNAL

B21 → THRESHOLD CONTROL

B10 — (2b) → B10 → SIGNAL STRENGTH

B16 — (2c)

DIRECTIONAL DOPP. DET. U24 - U25 - Q15 (112) — E4 → DIRECTIONAL DOPPLER

A6 — (2d) → COMPRESSOR AMP U13A - U14A (104A) — A9 → AMP U17A (106A) — A14 → SQUARING AMP U18A - U18B (108A) — A17 → A17 CH 1

A17A CH 2 — SHORT RANGE (S.R.)

A6A — (2e) → COMPRESSOR AMP U13B - U14B (104B) — A9A → AMP U17B (106B) — A14A → SQUARING AMP U18C - U18D (108B) — A17A

A17D → DOPPLER

A6B — (2f) → COMPRESSOR AMP U15A - U16A (104C) — A9B → AMP U19A (106C) — A14B → SQUARING AMP U20A - U20B (108C) — A17B → PHASE DET. LONG RANGE U26 (116) — KA

B21

A6C — (2g) → COMPRESSOR AMP U15B - U16B (104D) — A9C → AMP U19B (106D) — A14C → SQUARING AMP U20C - U20D (108D) — A17C

SLOPE INV. LONG RANGE Q16 (92) — KA2 → INTERGRATER LONG RANGE U27A (118) — KA4 → COMPARATOR LONG RANGE U27B - Q17 (120) — K4 → RANGE DISABLE

FIG. 3

| 2A | 2B | 2C | 2D |

FIG. 1

BLOCKS FOR FRONT END ASSEMBLY

BLOCKS FOR SIGNAL CONDITIONING
ASSEMBLY

FIG. 2

BLOCKS IN SIGNAL PROCESSING ASSEMBLY

FIG.4

FIGURE 5A

FIGURE 5B

FIGURE 5C

Note 1. Windows 1, 3, 4, 6, 8, 9 are not used in the receiver.
They could be used for antenna beam steering, transponder purposes, etc.

**FIGURE 6**